(19) Europäisches Patentamt
European Patent Office
Office européen des brevets

(11) **EP 3 036 841 B1**

(12) **FASCICULE DE BREVET EUROPEEN**

(45) Date de publication et mention de la délivrance du brevet:
**21.02.2018 Bulletin 2018/08**

(51) Int Cl.:
***H04B 7/08*** *(2006.01)*     ***H04B 1/16*** *(2006.01)*

(21) Numéro de dépôt: **14752821.0**

(22) Date de dépôt: **13.08.2014**

(86) Numéro de dépôt international:
**PCT/EP2014/067293**

(87) Numéro de publication internationale:
**WO 2015/024828 (26.02.2015 Gazette 2015/08)**

(54) **PROCÉDÉ DE DÉTECTION D'UN SIGNAL ÉLECTROMAGNÉTIQUE PAR UN RÉSEAU ANTENNAIRE A DIVERSITÉ DE DIAGRAMME ET DISPOSITIF METTANT EN OEUVRE LE PROCÉDÉ**

VERFAHREN ZUR DETEKTION EINES ELEKTROMAGNETISCHEN SIGNALS DURCH EIN ANTENNENARRAY MIT STRUKTURDIVERSITÄT UND VORRICHTUNG ZUR DURCHFÜHRUNG DES VERFAHRENS

METHOD FOR THE DETECTION OF AN ELECTROMAGNETIC SIGNAL BY AN ANTENNA ARRAY WITH PATTERN DIVERSITY, AND DEVICE IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2013 FR 1301974**

(43) Date de publication de la demande:
**29.06.2016 Bulletin 2016/26**

(73) Titulaire: **THALES**
**92400 Courbevoie (FR)**

(72) Inventeurs:
• **LE MEUR, Anne**
**F-78851 Elancourt Cedex (FR)**
• **DELABBAYE, Jean-Yves**
**F-78125 Vieille Eglise en Yvelines (FR)**

(74) Mandataire: **HAMMES, Pierre**
**Marks & Clerk France**
**Immeuble Visium**
**22, avenue Aristide Briand**
**94117 Arcueil Cedex (FR)**

(56) Documents cités:
**US-A1- 2005 259 621**

• **DOMINIQUE NOGUET (CEA-LETI ET AL: "Sensing techniques for Cognitive Radio - State of the art and trends - A White Paper - April 15 ; P1900.6_WhitePaper_Sensing_final", IEEE DRAFT; P1900.6_WHITEPAPER_SENSING_FINAL, IEEE-SA, PISCATAWAY, NJ USA, vol. 1900.6, 17 juillet 2009 (2009-07-17), pages 1-117, XP068028971,**

**Description**

L'invention concerne le domaine de la détection d'émissions radio électriques provenant, notamment, de radars ou de systèmes de télécommunications, et reçus par un réseau antennaire à diversité de diagramme.

L'invention porte plus précisément sur un procédé de détection d'un signal électromagnétique par un réseau antennaire à diversité de diagramme ainsi qu'un dispositif pour la mise en oeuvre de ce procédé.

Le réseau de capteurs considéré par l'invention est constitué d'antennes éventuellement non colocalisées. Les antennes sont à diagrammes de réception identiques ou non et leurs axes principaux ne sont pas orientés dans la même direction de l'espace. Ce type de réseau d'antennes est utilisé notamment dans le domaine de la goniométrie.

Un problème à résoudre dans le domaine de la détection de signaux électromagnétiques réside dans la non connaissance a priori du type de signal intercepté, en particulier sa largeur de bande fréquentielle, le type de modulation utilisée ou plus généralement tout paramètre associé à la forme d'onde du signal.

Les méthodes de détection connues sont généralement construites sur la connaissance a priori de la forme du signal et utilisent un filtre adapté en fonction de cette connaissance.

Cependant, il n'est pas possible de mettre en oeuvre des filtres adaptés à tous les types de signaux attendus.

Deux grands types de récepteurs ont été envisagés jusqu'à présent pour réaliser une veille sur une très large bande de fréquences : les récepteurs couvrant en permanence la bande à veiller, qui ne détectent que les signaux de puissance élevée, et les récepteurs bande étroite, qui ne permettent pas de couvrir instantanément la bande totale mais qui s'attachent à détecter des signaux de puissance plus faible et qui permettent des analyses plus fines du signal. La présente invention se place dans la perspective des récepteurs bande étroite.

Il existe un problème à résoudre pour concevoir une méthode qui s'adapte à tout type de signal quelle que soit sa bande passante.

En outre il existe un problème spécifique aux réseaux à diversité de diagramme car à un instant donné le signal ne peut être considéré le même, sur tous les éléments antennaires du réseau, qu'à un gain complexe près, non réductible à une phase, dépendant de la direction d'arrivée du signal.

En outre, pour élaborer un traitement de détection, il est important de minimiser les transferts de données entre les capteurs et un organe central (qui peut être l'un des capteurs) dans le but de limiter la complexité du système. Cela sous-entend qu'il est préférable d'implémenter la plus grande partie du traitement localement, ce qui limite l'exploitation de la dépendance (ou corrélation) des mesures captées au même instant sur deux capteurs différents.

Les méthodes traditionnelles de détection de signaux électromagnétiques sont notamment basées sur les étapes préalables suivantes.

La réception de signaux est faite par le biais d'un réseau antennaire à diversité de diagramme, ou réseau goniométrique, et la démodulation du signal est réalisée par le même oscillateur local pour tous les capteurs du réseau. Le signal est ensuite échantillonné, sur chaque voie de réception, sous forme réelle ou complexe, puis un ou plusieurs bancs de filtres sont appliqués, par exemple, par Transformée de Fourier Discrète pondérée. Autrement dit, on applique plusieurs Transformées de Fourier Discrètes décalées temporellement afin de réaliser une adaptation moyenne à la bande des signaux d'intérêt. A l'issue de cette opération, appelée analyse temps-fréquence, le signal est transformé en une grille temps-fréquence décomposée en cases temps-fréquences, chaque case contenant le résultat d'une transformée de Fourier discrète pour un intervalle temporel et un intervalle fréquentiel donnés.

Une méthode de détection connue consiste à comparer la puissance du signal, dans chaque case temps-fréquence, à un seuil de détection donné. Cependant cette prise de décision case par case n'est pas optimale lorsque le signal est étalé en temps et/ou en fréquence.

En effet, l'hypothèse sous-jacente à cette méthode est que le signal est concentré sur un nombre de cases très réduit, autrement dit que la transformée de Fourier discrète utilisée pour effectuer l'analyse spectrale est adaptée à la bande du signal. Cette hypothèse ne peut pas être valable pour toute la gamme des signaux à traiter, et aucun effet d'intégration ne vient compenser ce défaut. De plus, pour assurer un temps moyen entre fausses alarmes correct, comme il y a beaucoup de détecteurs en parallèle, le seuil de détection est élevé, obligeant à avoir un fort rapport signal à bruit.

Une manière d'améliorer les méthodes précitées consiste à effectuer une intégration sur des fenêtres temps-fréquence glissantes, afin de concentrer l'énergie des signaux qui s'étalent sur plusieurs cases. Ce passage d'un détecteur mono-case à un détecteur multi-cases permet de bénéficier d'un gain d'intégration incohérent lorsque le signal s'étale sur plusieurs cases temps-fréquence. La limite de cette méthode tient cependant à son caractère mono-voie et à l'adéquation entre la taille de la fenêtre et l'étalement du signal. Si la fenêtre est sous-dimensionnée, elle ne prend pas en compte tous les échantillons de signal utile, et inversement si elle est surdimensionnée, elle intègre des échantillons de bruit et fait baisser le rapport signal sur bruit apparent.

Par ailleurs, les méthodes connues n'utilisent généralement qu'une antenne pour effectuer la détection et par conséquent n'exploitent pas toute l'information recueillie.

On connaît également les méthodes décrites dans le document « Dominique Noguet, CEA-LETI et al : Sensing

2

techniques for cognitive radio-state of the art and trends-aw chite paper » April 15, IEEE draft ; 17 juillet 2009.

Un objectif de la présente invention est de résoudre les limitations des solutions connues et de concevoir une méthode de détection de signaux électromagnétiques qui ne nécessite pas de connaissance a priori du type de signal et qui peut être implantée sur un réseau antennaire à diversité de diagramme.

L'invention a pour objet un procédé de détection d'un signal électromagnétique, dit signal d'intérêt, susceptible d'être contenu dans un signal électromagnétique reçu par un réseau antennaire comprenant une pluralité d'éléments antennaires indexés par un indice p, ledit procédé comprenant les étapes suivantes :

- Appliquer audit signal électromagnétique reçu par chaque élément antennaire une pluralité de transformées temps-fréquence afin d'obtenir une représentation dudit signal électromagnétique reçu sous la forme d'une pluralité de cases temps-fréquence contenant chacune le spectre dudit signal électromagnétique reçu pour un intervalle fréquentiel et un intervalle temporel donnés,
- Pour chaque case temps/fréquence d'un ensemble de cases donné et pour chaque voie de réception d'indice p,

  ◦ Calculer la puissance dudit signal électromagnétique reçu,
  ◦ Appliquer la fonction non linéaire $g_P$ suivante au résultat du calcul de puissance précédent, de sorte à annuler les cases temps/fréquence ne contenant sensiblement que du bruit :

    ▪ Si la puissance dudit signal est inférieure ou égale à un premier seuil prédéterminé $t_{0p}$, le résultat de la fonction $g_P$ est nul, ledit premier seuil $t_{0p}$ étant dépendant de la probabilité q de présence du signal d'intérêt, de la puissance du bruit thermique et de la puissance du signal d'intérêt,
    ▪ Si la puissance dudit signal est strictement supérieure audit premier seuil $t_{0p}$, le résultat de la fonction $g_P$ est égal à la différence entre la puissance dudit signal et ledit premier seuil prédéterminé $t_{0p}$, multipliée par un coefficient de pondération $\beta_P$ dépendant de la puissance du signal d'intérêt et de la puissance du bruit thermique

- Intégrer le résultat de l'application de la fonction non linéaire $g_P$ sur le dit ensemble de cases temps-fréquence,
- Calculer un critère de détection T en intégrant le résultat de l'étape d'intégration précédente sur l'ensemble des éléments antennaires, et en ajoutant au résultat de cette intégration un terme correctif dépendant du rapport signal à bruit et de la probabilité q de présence du signal d'intérêt dans ledit signal électromagnétique reçu,
- Comparer le résultat de l'intégration à un second seuil prédéterminé, dit seuil de détection $S_{det}$, pour détecter la présence du signal d'intérêt.

Selon un aspect particulier de l'invention, ledit premier seuil $t_{0p}$ est déterminé en recherchant l'intersection entre l'axe des abscisses et l'asymptote à l'infini du logarithme du rapport de vraisemblance défini comme le quotient des densités de probabilités dans l'hypothèse où le signal d'intérêt est présent dans une case temps/fréquence et dans l'hypothèse où le signal d'intérêt est absent dans une case temps/fréquence.

Selon un aspect particulier de l'invention, la probabilité q de présence du signal d'intérêt et la somme de la puissance du bruit thermique et de la puissance du signal d'intérêt sur chaque voie sont estimés, à l'aide des sous-étapes suivantes :

- Calculer les moments d'ordre un et deux de la puissance du signal mesurée pour chaque voie de réception,
- Identifier les moments d'ordre un et deux calculés à leurs valeurs théoriques pour former un système d'équations,
- Résoudre ledit système d'équations pour déterminer, pour chaque voie de réception, une estimée $q_P$ de ladite probabilité et une estimée de l'inverse de ladite somme,
- Calculer la moyenne des estimées $q_P$ de ladite probabilité sur l'ensemble des voies de réception.

Selon un aspect particulier de l'invention, l'estimée de l'inverse de la somme de la puissance du bruit thermique et de la puissance du signal d'intérêt est affinée en résolvant une seconde fois ledit système d'équations dans lequel la probabilité q inconnue est remplacée par la moyenne des estimées $q_P$ de ladite probabilité sur l'ensemble des voies de réception.

Selon un aspect particulier de l'invention, ledit second seuil de détection $S_{det}$ est configuré pour respecter une probabilité de fausse alarme donnée.

Selon un aspect particulier de l'invention, ledit réseau antennaire est à diversité de diagramme.

L'invention a également pour objet un dispositif pour la détection d'un signal électromagnétique, dit signal d'intérêt, susceptible d'être contenu dans un signal électromagnétique, ledit dispositif comprenant un réseau antennaire comprenant une pluralité d'éléments antennaires pour la réception dudit signal électromagnétique et des moyens configurés pour mettre en oeuvre le procédé selon l'invention.

D'autres caractéristiques et avantages de la présente invention apparaîtront mieux à la lecture de la description qui suit en relation aux dessins annexés qui représentent :

- La figure 1, un organigramme des étapes de mise en oeuvre du procédé de détection de signaux électromagnétiques selon l'invention,
- La figure 2, un synoptique d'un dispositif pour la détection de signaux électromagnétiques pour un réseau antennaire à diversité de diagramme selon l'invention.

Le procédé de détection de signal selon l'invention est appliqué aux signaux de sortie du traitement d'analyse temps-fréquence effectué par transformée de Fourier discrète.

Un objectif de l'invention est de décider de la présence ou de l'absence d'un signal s, appelé par la suite signal d'intérêt, en présence de bruit thermique modélisé comme un signal aléatoire Gaussien complexe centré de densité spectrale constante pour chacune de ses composantes réelle et imaginaire qui sont indépendantes entre elles.

Le principe à la base de l'invention consiste à utiliser la théorie de la décision statistique qui vise à tester la validité de l'un des deux modèles du signal reçu définis respectivement par la présence du signal d'intérêt (hypothèse notée $H_1$) ou l'absence du signal d'intérêt (hypothèse $H_0$), de sorte à optimiser le critère de Neyman-Pearson qui consiste à maximiser la probabilité de détection, sous la contrainte que la probabilité de fausse alarme est fixée.

Les hypothèses précitées $H_1$ et $H_0$ sont testées pour une fenêtre temps-fréquence glissante constituée d'une pluralité de cases. Par la suite l'indice n sera employé en référence à une case temps-fréquence donnée au sein de ladite fenêtre et on considère qu'après analyse spectrale par transformée de Fourier discrète, le signal mesuré dans une case temps/fréquence est indépendant d'un capteur à l'autre.

La modélisation selon l'invention consiste à considérer que lorsque le signal d'intérêt $s_{pn}$ est présent dans la case temps-fréquence d'indice n du capteur d'indice p, il est modélisé par un échantillon d'une variable aléatoire Gaussienne complexe centrée à composantes indépendantes de variance $\sigma_p'^2$. Par ailleurs les différentes valeurs de l'échantillon $s_{pn}$ seront considérées comme indépendantes en n et en p. Ce modèle ne fait aucune hypothèse de continuité de phase ou d'amplitude de façon à être valable pour toutes les modulations possibles, et traduit l'incohérence de phase d'un capteur à l'autre.

Ainsi, le signal mesuré pour la case temps-fréquence d'indice n de la fenêtre courante et pour le capteur d'indice p peut s'écrire, lorsque le signal d'intérêt est présent dans la case considérée : $x_{pn} = s_{pn} + w_{pn}$, n =1,2,...,N et p=1,2,...,P ($H_1$)

L'échantillon $s_{pn}$ est de puissance non nulle avec une probabilité q, supposée identique pour tous les capteurs du réseau et de puissance sensiblement nulle avec une probabilité 1-q.

Lorsque le signal d'intérêt est présent dans une case, on modélise les échantillons $s_{pn}$ comme des échantillons indépendants en p et n de variables Gaussiennes complexes, centrées, telles que : $E\left(\left|s_{pn}\right|^2\right) = 2\sigma_p'^2$, où E() désigne l'espérance mathématique.

Cette modélisation prend en compte à la fois la méconnaissance de la modulation du signal d'intérêt et la méconnaissance des gains d'antennes du réseau.

Les échantillons du bruit thermique $w_{pn}$ sont des échantillons indépendants en p et n d'une variable Gaussienne, centrée, complexe, de variance $2\sigma^2$. On considère dans la suite que la puissance du bruit thermique $\sigma^2$ est connue.

Lorsque le signal est absent d'une case temps-fréquence, le modèle selon l'invention devient $x_{pn} = w_{pn}$, n = 1,2,...,N et p = 1,2,...,P (hypothèse $H_0$).

Par la suite, on pose : $2\sigma_p^2 = 2\sigma_p'^2 + 2\sigma^2$, la puissance du signal mesuré par un capteur d'indice p, égale à la somme de la puissance du signal d'intérêt et de la puissance du bruit thermique.

Dans l'hypothèse $H_1$, la densité de probabilité des mesures $x_{pn}$ s'écrit à l'aide de la relation suivante

$$p_1 = \prod_{p=1}^{P}\prod_{n=1}^{N} p_1(x_{pn}) = \prod_{p=1}^{P}\prod_{n=1}^{N}\left[\frac{q}{2\pi\sigma_p^2}\exp\left(-\frac{\left|x_{pn}\right|^2}{2\sigma_p^2}\right) + \frac{1-q}{2\pi\sigma^2}\exp\left(-\frac{\left|x_{pn}\right|^2}{2\sigma^2}\right)\right] \quad (1)$$

Dans l'hypothèse $H_0$, la densité de probabilité des mesures $p_0$ s'écrit également à l'aide de la relation (1) en prenant q égal à 0.

Pour réaliser un détecteur optimal à partir de la relation (1), une difficulté réside dans le fait que les paramètres de puissance $\sigma_p^2$ et de probabilité q sont inconnus.

On pose, pour simplifier, les notations, $t_{pn} = |x_{pn}|^2$, $\tau_p = 1/2\sigma_p^2$, p=1,2,...P ; et $\tau = 1/2\sigma^2$.

On a donc $\tau > \tau_p$ pour p = 1,2,... P.

Lorsque les paramètres $\tau_p$ et q sont connus, le test optimal au sens du critère de Neyman-Pearson pour décider entre les hypothèses $H_1$ et $H_0$ consiste à comparer à un seuil de détection prédéterminé le rapport de vraisemblance $p_1/p_0$.

Ce rapport peut s'écrire, avec les nouvelles notations :

$$\frac{p_1}{p_0} = \prod_{p=1}^{P}\prod_{n=1}^{N}\left[ q\frac{\tau_p}{\tau}\exp\left(\left(\tau - \tau_p\right)t_{pn}\right) + 1 - q\right] \quad (2)$$

La relation (2) peut également s'écrire sous forme logarithmique sous la forme donnée par la relation (3) :

$$\begin{cases} \ln\frac{p_1}{p_0} &= \sum_{p=1}^{P}\sum_{n}\left[\ln\left(q\frac{\tau_p}{\tau} + 1 - q\right) + \ln\left(\frac{q\frac{\tau_p}{\tau}\exp\left(\tau - \tau_p\right)t_{pn} + 1 - q}{q\frac{\tau_p}{\tau} + 1 - q}\right)\right] \\ &= N\sum_{p=1}^{P}\ln\left(q\frac{\tau_p}{\tau} + 1 - q\right) + \sum_{p,n}\ln\left(\frac{q\alpha_p\exp\left(\beta_p t_{pn}\right) + 1 - q}{q\alpha_p + 1 - q}\right) \end{cases} \quad (3)$$

où l'on a posé : $\alpha_p = \tau_p/\tau$ ; $\beta_p = \tau - \tau_p$

Pour $\alpha_p$ et $\beta_p$ génériques, notés $\alpha$ et $\beta$,

$$\varphi : x \to \ln\left[\frac{q\alpha\exp(\beta x) + 1 - q}{q\alpha + 1 - q}\right]$$

la fonction a le comportement suivant sur $\mathfrak{R}^+$ : $\varphi(0) = 0$

$$\varphi(x) \approx \beta x + \ln\frac{q\alpha}{q\alpha + 1 - q}\text{ pour } x \to \infty.$$

Cette asymptote coupe l'axe des abscisses en $x_0 = -\frac{1}{\beta}\ln\frac{q\alpha}{q\alpha + 1 - q}$ ($x_0 > 0$).

En approximant le comportement de la fonction $\varphi(x)$ par son asymptote en $+\infty$ et par la droite y=0, on obtient la fonction $g_p(x)$ définie de la façon suivante

$$g_p(x) = \begin{cases} 0 & si \quad 0 \le x \le x_0 \\ \beta(x - x_0) & si \quad x > x_0 \end{cases}.$$

Le test de détection selon l'invention consiste à comparer le logarithme du rapport de vraisemblance $p_1/p_0$ à un seuil de détection prédéterminé.

En utilisant l'approximation par la fonction $g_p(x)$ définie ci-dessus dans la relation (3), le test de détection selon l'invention consiste à comparer la fonction T à un seuil de détection prédéterminé, avec T donné par la relation suivante.

$$T = N \sum_{p=1}^{P} \ln\left(q\alpha_p + 1 - q\right) + \sum_{p=1}^{P} \sum_{n=1}^{N} g_p(t_{pn}) \quad (4)$$

Selon un mode de réalisation particulier de l'invention, dans le cas où les paramètres $\tau_p$ et q sont inconnus, on les remplace par une estimation. On décrit à présent une méthode possible pour estimer ces deux paramètres à partir des mesures disponibles dans les P fenêtres d'analyse correspondant aux P voies de réception.

Les paramètres $\tau_p$ et q peuvent être estimés en exploitant uniquement les deux premiers moments de la variable $t_{pn}$ et en égalant la formulation empirique de chacun des deux moments à l'expression réelle du moment.

En appliquant cette méthode, on arrive au système d'équations donné par les relations (5).

$$\begin{cases} m_{1p} = \dfrac{1}{N} \sum_{n=1}^{N} t_{pn} = \dfrac{q}{\tau_p} + \dfrac{1-q}{\tau} = q\left(\dfrac{1}{\tau_p} - \dfrac{1}{\tau}\right) + \dfrac{1}{\tau} \\[3mm] m_{2p} = \dfrac{1}{N} \sum_{n=1}^{N} t_{pn}^2 = \dfrac{2q}{\tau_p^2} + 2.\dfrac{1-q}{\tau^2} = 2q\left(\dfrac{1}{\tau_p^2} - \dfrac{1}{\tau^2}\right) + \dfrac{2}{\tau^2} \end{cases} \quad (5)$$

Le système d'équations (5) comporte 2P équations pour P+1 inconnues, avec P le nombre d'éléments antennaires du réseau. Une méthode possible pour résoudre ce système consiste à exécuter les étapes suivantes.

On résout le système (5) pour chaque élément antennaire d'indice p pour en déduire une estimée de la probabilité $\hat{q}_p$ de présence du signal d'intérêt dans une case temps-fréquence et une première estimée $\hat{\hat{\tau}}_p$ du paramètre $\tau_p$.

On calcule la moyenne des estimées $\hat{q}_p$ sur l'ensemble des éléments antennaires afin d'en déduire l'estimée finale $\hat{q}$ du paramètre q.

Optionnellement, on peut affiner l'estimée du paramètre $\tau_p$ en réintroduisant l'estimée finale $\hat{q}$ dans le système (5). On obtient ainsi une seconde estimée $\hat{\tau}_p$.

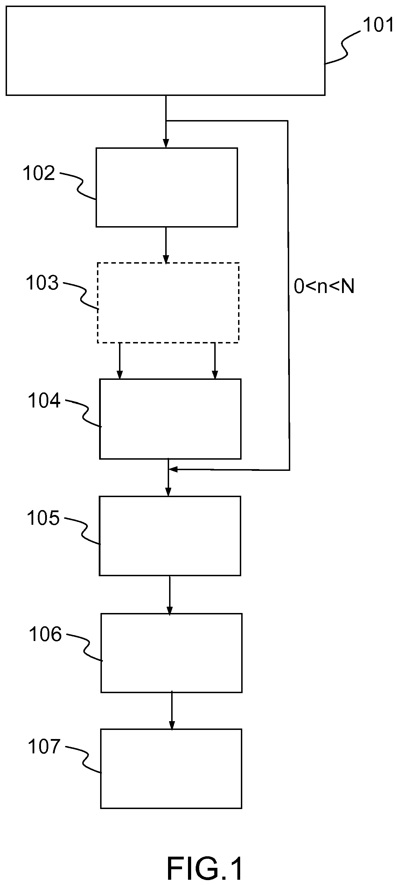

La figure 1 résume, sur un organigramme, les différentes étapes de mise en oeuvre du procédé de détection de signaux électromagnétiques selon l'invention.

Dans une première étape 101, une transformation temps-fréquence est appliquée aux signaux reçus sur chaque élément antennaire du réseau. Plus précisément, on applique pour chaque signal, plusieurs transformées de Fourier discrètes, décalées temporellement, afin d'obtenir une représentation temps fréquence du signal sous la forme d'une grille de cases temps-fréquence contenant chacune le spectre du signal pour un intervalle fréquentiel et un intervalle temporel donnés.

Dans une deuxième étape 102, on calcule la puissance du signal dans chaque case temps-fréquence obtenue à l'issue de la première étape 101. A l'issue de la deuxième étape 102, on a, pour chaque élément antennaire d'indice p et chaque case temps-fréquence d'indice n, une mesure de la puissance $t_{pn}$ du signal.

Dans une étape suivante 104, on applique la fonction non linéaire $g_p$ à chaque mesure de puissance $t_{pn}$ calculée à la deuxième étape 102 afin d'éliminer les cases temps-fréquence supposées ne contenir que du bruit.

La fonction non linéaire $g_p$ est définie à l'aide des relations suivantes :

$$g_p(t_{pn}) = \begin{cases} 0 & si \quad 0 \le t_{pn} \le t_{0_p} \\ \beta_p\left(t_{pn} - t_{0_p}\right) & si \quad t_{pn} > t_{0_p} \end{cases}$$

$$t_{0_p} = -\frac{1}{\beta_p} \ln \frac{q\alpha_p}{q\alpha_p + 1 - q} ,$$

avec $\alpha_p = \hat{\tau}_p/\tau$, $\beta_p = \tau - \hat{\tau}_p$, Comme introduit plus haut dans la description, $\tau = 1/2\sigma^2$ et $\hat{\tau}_p = 1/2\sigma_p^2$ avec $\sigma^2$ la valeur supposée connue de la puissance du bruit thermique et $\sigma_p^2$ une estimation de la somme de la puissance du signal d'intérêt et de la puissance du bruit thermique pour le signal reçu par l'élément antennaire d'indice p. Le paramètre q est significatif de la probabilité de présence du signal d'intérêt dans une case temps-fréquence.

Les paramètres q et $\tau_p$ sont des points d'entrée de l'étape 104. Ils peuvent être estimés à partir du calcul des moments d'ordre 1 et 2 de la puissance du signal sur chaque voie, tel qu'explicité ci-dessus, ou par toute autre méthode équivalente.

Dans une étape optionnelle 103, les paramètres q et $\tau_p$ sont donc estimés au moyen des sous étapes suivantes.

Dans une première sous-étape on calcule les moments d'ordre 1 et 2 de la puissance du signal sur chaque voie de réception, autrement dit la moyenne et la variance sur la fenêtre d'analyse.

Dans une deuxième sous-étape, on résout le système d'équations (5) pour en déduire une estimée du paramètre q pour chaque élément antennaire ou capteur et une première estimée du paramètre $\tau_p$.

Dans une troisième sous-étape, on calcule la moyenne des estimées du paramètre q sur l'ensemble des capteurs.

Optionnellement, on affine la première estimée du paramètre $\tau_p$ en résolvant à nouveau le système d'équations (5) dans lequel l'inconnue q a été remplacée par son estimée calculée à la troisième sous-étape.

Dans une étape suivante 105, le résultat de l'étape 104 de non linéarité est intégré sur l'ensemble des cases temps-fréquence de la fenêtre d'analyse.

Dans une étape suivante 106, on construit le critère de détection T en intégrant le résultat de l'étape précédente 105 sur l'ensemble des capteurs puis en additionnant à ce résultat un terme correctif. Le critère de détection T peut être formulé à l'aide de la relation (4) :

$$T = N\sum_{p=1}^{P} \ln\left(q\alpha_p + 1 - q\right) + \sum_{p=1}^{P}\sum_{n=1}^{N} g_p(t_{pn}) \quad (4)$$

Le terme correctif ajouté à l'intégration incohérente des termes $g_p(t_{pn})$ permet de pénaliser les voies de réception contenant relativement moins d'information utile que d'autres.

Enfin dans une dernière étape 107, le critère de détection T est comparé à un seuil de détection $S_{det}$ prédéterminé pour en déduire la présence ou l'absence de signal.

Le seuil de détection $S_{det}$ est déterminé par simulation pour respecter une probabilité de fausse alarme donnée.

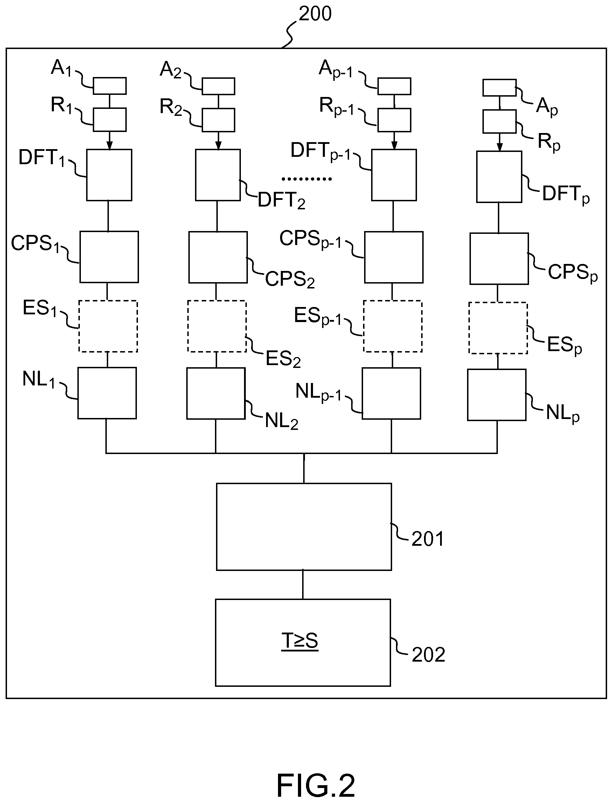

La figure 2 décrit un synoptique d'un dispositif 200 pour la détection de signaux électromagnétiques pour un réseau antennaire à diversité de diagramme selon l'invention.

Un tel dispositif 200 comprend un réseau antennaire composé d'une pluralité d'éléments antennaires ou capteurs $A_1, A_2, A_3...A_P$. Chaque élément antennaire est couplé à une voie de réception $R_1, R_2, R_3...R_P$ pour, notamment, démoduler et échantillonner le signal analogique reçu par chaque capteur. En sortie de chaque voie de réception, une transformée temps-fréquence $DFT_1, DFT_2, DFT_3, DFT_P$ est appliquée, par le biais d'une ou plusieurs transformées de Fourier discrètes décalées temporellement. Pour chaque voie de réception, cette opération aboutit à la construction d'une grille de cases temps-fréquences contenant chacune le spectre du signal pour un intervalle temporel et un intervalle fréquentiel donnés.

Pour chaque voie de réception, le dispositif 200 selon l'invention comprend en outre un module de calcul de la puissance du signal pour chaque case temps-fréquence $CPS_1, CPS_2,...CPS_{P-1}, CPS_P$, et un module de traitement $NL_1, NL_2, NL_{P-1}, NL_P$ pour appliquer l'étape de non linéarité 104 du procédé selon l'invention.

Optionnellement, le dispositif 200 comporte également, pour chaque voie de réception, un module d'estimation $ES_1, ES_2, ES_{P-1}, ES_P$ pour estimer les paramètres q et $\tau_p$ selon l'étape 103 du procédé selon l'invention.

Le dispositif 200 comporte enfin un module de calcul 201 pour la construction du critère de détection T selon les étapes 105 et 106 du procédé selon l'invention et un module de décision 202 pour effectuer la comparaison, selon l'étape 107, du critère T avec un seuil de détection prédéterminé.

Les modules de calcul du dispositif 200 selon l'invention peuvent être agencés selon différentes architectures, en particulier chaque étape du procédé peut être implémentée par un module distinct ou au contraire l'ensemble des étapes peuvent être regroupées au sein d'un module de calcul unique.

Chacun des modules de calcul que comporte le dispositif selon l'invention peut être réalisé sous forme logicielle et/ou matérielle. Chaque module peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

**Revendications**

1. Procédé de détection d'un signal électromagnétique, dit signal d'intérêt, susceptible d'être contenu dans un signal électromagnétique reçu par un réseau antennaire comprenant une pluralité d'éléments antennaires indexés par un indice p, ledit procédé comprenant les étapes suivantes :

- Appliquer audit signal électromagnétique reçu par chaque élément antennaire une pluralité de transformées temps-fréquence (101) afin d'obtenir une représentation dudit signal électromagnétique reçu sous la forme d'une pluralité de cases temps-fréquence contenant chacune le spectre dudit signal électromagnétique reçu pour un intervalle fréquentiel et un intervalle temporel donnés,
- Pour chaque case temps/fréquence d'un ensemble de cases donné et pour chaque voie de réception d'indice p,

    ◦ Calculer (102) la puissance dudit signal électromagnétique reçu,
    ◦ Appliquer (104) la fonction non linéaire $g_P$ suivante au résultat du calcul de puissance précédent, de sorte à annuler les cases temps/fréquence ne contenant sensiblement que du bruit :

        ▪ Si la puissance dudit signal est inférieure ou égale à un premier seuil prédéterminé $t_{0p}$, le résultat de la fonction $g_P$ est nul, ledit premier seuil $t_{0p}$ étant dépendant de la probabilité q de présence du signal d'intérêt, de la puissance du bruit thermique et de la puissance du signal d'intérêt,
        ▪ Si la puissance dudit signal est strictement supérieure audit premier seuil $t_{0p}$, le résultat de la fonction $g_P$ est égal à la différence entre la puissance dudit signal et ledit premier seuil prédéterminé $t_{0p}$, multipliée par un coefficient de pondération $\beta_P$ dépendant de la puissance du signal d'intérêt et de la puissance du bruit thermique

- Intégrer (105) le résultat de l'application (104) de la fonction non linéaire $g_P$ sur le dit ensemble de cases temps-fréquence,
- Calculer (106) un critère de détection T en intégrant le résultat de l'étape d'intégration (105) précédente sur l'ensemble des éléments antennaires, et en ajoutant au résultat de cette intégration un terme correctif dépendant du rapport signal à bruit et de la probabilité q de présence du signal d'intérêt dans ledit signal électromagnétique reçu,
- Comparer (107) le résultat de l'intégration à un second seuil prédéterminé, dit seuil de détection $S_{det}$, pour détecter la présence du signal d'intérêt.

2. Procédé de détection d'un signal d'intérêt selon la revendication 1 dans lequel ledit premier seuil $t_{0p}$ est déterminé en recherchant l'intersection entre l'axe des abscisses et l'asymptote à l'infini du logarithme du rapport de vraisemblance défini comme le quotient des densités de probabilités dans l'hypothèse ($H_1$) où le signal d'intérêt est présent dans une case temps/fréquence et dans l'hypothèse ($H_0$) où le signal d'intérêt est absent dans une case temps/fréquence.

3. Procédé de détection d'un signal d'intérêt selon la revendication 2 dans lequel la probabilité q de présence du signal d'intérêt et la somme de la puissance du bruit thermique et de la puissance du signal d'intérêt sur chaque voie sont estimés, à l'aide des sous-étapes suivantes (103) :

- Calculer les moments d'ordre un et deux de la puissance du signal mesurée pour chaque voie de réception,
- Identifier les moments d'ordre un et deux calculés à leurs valeurs théoriques pour former un système d'équations,
- Résoudre ledit système d'équations pour déterminer, pour chaque voie de réception, une estimée $q_P$ de ladite probabilité et une estimée de l'inverse de ladite somme,
- Calculer la moyenne des estimées $q_P$ de ladite probabilité sur l'ensemble des voies de réception.

4. Procédé de détection d'un signal d'intérêt selon la revendication 3 dans lequel l'estimée de l'inverse de la somme de la puissance du bruit thermique et de la puissance du signal d'intérêt est affinée en résolvant une seconde fois ledit système d'équations dans lequel la probabilité q inconnue est remplacée par la moyenne des estimées $q_P$ de ladite probabilité sur l'ensemble des voies de réception.

5. Procédé de détection d'un signal électromagnétique selon l'une des revendications précédentes dans lequel ledit second seuil de détection $S_{det}$ est configuré pour respecter une probabilité de fausse alarme donnée.

6. Procédé de détection d'un signal électromagnétique selon l'une des revendications précédentes dans lequel ledit réseau antennaire est à diversité de diagramme.

7. Dispositif (200) pour la détection d'un signal électromagnétique, dit signal d'intérêt, susceptible d'être contenu dans un signal électromagnétique, ledit dispositif (200) comprenant un réseau antennaire comprenant une pluralité d'éléments antennaires ($A_1,..A_P$) pour la réception dudit signal électromagnétique et des moyens configurés pour mettre en oeuvre le procédé selon l'une des revendications 1 à 6.

**Patentansprüche**

**1.** Verfahren zur Erkennung eines elektromagnetischen Signals, Signal von Interesse genannt, das in einem elektromagnetischen Signal enthalten sein kann, das von einem Antennenarray empfangen wird, das eine Vielzahl von durch einen p-Index indizierten Antennenelementen aufweist, wobei das Verfahren die folgenden Schritte umfasst:

- Anwenden einer Vielzahl von Zeit-Frequenz-Transformationen (101) auf das von jedem Antennenelement empfangene elektromagnetische Signal, um eine Darstellung des in Form einer Vielzahl von Zeit-Frequenz-Feldern empfangenen elektromagnetischen Signals zu erhalten, die jeweils das Spektrum des empfangenen elektromagnetischen Signals für ein gegebenes Frequenzintervall und Zeitintervall enthält,
- Für jedes Zeit-/Frequenzfeld einer gegebenen Gesamtheit von Feldern und für jeden Empfangskanal des Index p,

  ◦ Berechnen (102) der Leistung des empfangenen elektromagnetischen Signals,
  ◦ Anwenden (104) der folgenden nichtlinearen Funktion $g_p$ auf das Ergebnis der vorherigen Leistungsberechnung, um die Zeit-/Frequenzfelder zu löschen, die im Wesentlichen nur Rauschen enthalten:

    ▪ wenn die Leistung des Signals kleiner oder gleich einem ersten vorbestimmten Schwellenwert $t_{0p}$ ist, ist das Ergebnis der Funktion $g_P$ Null, wobei der erste Schwellenwert $t_{0p}$ von der Wahrscheinlichkeit q des Vorhandenseins des Signals von Interesse, der Leistung des thermischen Rauschens und der Leistung des Signals von Interesse abhängig ist,
    ▪ wenn die Leistung des Signals streng größer als der erste Schwellenwert $t_{0p}$ ist, ist das Ergebnis der Funktion $g_P$ gleich der Differenz zwischen der Leistung des Signals und dem ersten vorbestimmten Schwellenwert $t_{0p}$, multipliziert mit einem Gewichtungskoeffizienten $\beta_P$ in Abhängigkeit von der Leistung des Signals von Interesse und der Leistung des thermischen Rauschens,

- Integrieren (105) des Ergebnisses der Anwendung (104) der nichtlinearen Funktion $g_P$ auf die Gesamtheit von Zeit-Frequenz-Feldern,
- Berechnen (106) eines Erkennungskriteriums T durch Integrieren des Ergebnisses des vorhergehenden Integrationsschrittes (105) über die Gesamtheit von Antennenelementen und durch Addieren eines Korrekturterms zu dem Ergebnis dieser Integration in Abhängigkeit des Signal-Rausch-Verhältnisses und der Wahrscheinlichkeit q des Vorhandenseins des Signals von Interesse in dem empfangenen elektromagnetischen Signal,
- Vergleichen (107) des Integrationsergebnisses mit einem zweiten vorbestimmten Schwellenwert, der Erkennungsschwellenwert $S_{det}$ genannt, um das Vorhandensein des Signals von Interesse zu erkennen.

**2.** Verfahren zur Erkennung eines Signals von Interesse nach Anspruch 1, wobei der erste Schwellenwert $t_{0p}$ bestimmt wird, indem nach dem Schnittpunkt zwischen der Abszissenachse und der Asymptote bei Unendlich des Logarithmus des Wahrscheinlichkeitsverhältnisses gesucht wird, der als der Quotient von Wahrscheinlichkeitsdichten in der Hypothese ($H_1$) definiert wird, in der das Signal von Interesse in einem Zeit/Frequenz-Feld vorhanden ist und in der Hypothese ($H_0$), in der das Signal von Interesse in einem Zeit-/Frequenzfeld fehlt.

**3.** Verfahren zur Erkennung eines Signals von Interesse nach Anspruch 2, wobei die Wahrscheinlichkeit q des Vorhandenseins des Signals von Interesse und die Summe der Leistung des thermischen Rauschens und der Leistung des Signals von Interesse auf jedem Kanal unter Verwendung der folgenden Teilschritte (103) geschätzt werden:

- Berechnen der Momente erster und zweiter Ordnung der gemessenen Signalleistung für jeden Empfangskanal,
- Identifizieren der berechneten Momente erster und zweiter Ordnung mit ihren theoretischen Werten, um ein Gleichungssystem zu bilden,
- Lösen des Gleichungssystems, um für jeden Empfangskanal eine Schätzung $q_P$ der Wahrscheinlichkeit und eine Schätzung des Kehrwerts der Summe zu bestimmen,
- Berechnen des Durchschnitts der Schätzungen $q_P$ der Wahrscheinlichkeit auf der Gesamtheit der Empfangskanäle.

**4.** Verfahren zur Erkennung eines Signals von Interesse nach Anspruch 3, wobei die Schätzung des Kehrwerts der Summe der thermischen Rauschleistung und der Leistung des Signals von Interesse verfeinert wird, indem das Gleichungssystem, in dem die unbekannte Wahrscheinlichkeit q durch den Durchschnitt der Schätzungen $q_P$ der Wahrscheinlichkeit auf der Gesamtheit der Empfangskanäle ersetzt wird, ein zweites Mal aufgelöst wird.

5. Verfahren zur Erkennung eines elektromagnetischen Signals nach einem der vorhergehenden Ansprüche, wobei der zweite Erkennungsschwellenwert $S_{det}$ konfiguriert ist, um eine gegebene Fehlalarmwahrscheinlichkeit einzuhalten.

6. Verfahren zur Erkennung eines elektromagnetischen Signals nach einem der vorhergehenden Ansprüche, wobei das Antennenarray ein Strukturdiversität hat.

7. Vorrichtung (200) zum Erkennen eines elektromagnetischen Signals, wobei das Signal von Interesse, das in einem elektromagnetischen Signal enthalten sein kann, wobei die Vorrichtung (200) ein Antennenarray umfasst, das eine Vielzahl von Antennenelementen ($A_1,..A_P$) zum Empfang des elektromagnetischen Signals und Mittel umfasst, die zur Durchführung des Verfahrens nach einem der Ansprüche 1 bis 6 konfiguriert sind.

**Claims**

1. Method for detecting an electromagnetic signal, called a signal of interest, capable of being contained in an electromagnetic signal received by an antenna array comprising a plurality of antenna elements indexed by an index p, the method comprising the following steps:

- applying to the electromagnetic signal received by each antenna element a plurality of time/frequency transforms (101) in order to obtain a representation of the received electromagnetic signal in the form of a plurality of time/frequency cells each containing the spectrum of the received electromagnetic signal for a given frequency range and a given time range,
- for each time/frequency cell of a given set of cells and for each reception channel of index p,

  ∘ calculating (102) the power of the received electromagnetic signal,
  ∘ applying (104) the following non-linear function $g_P$ to the result of the preceding power calculation so as to cancel the time/frequency cells containing substantially only noise:

    ▪ if the power of the signal is less than or equal to a first predetermined threshold $t_{0p}$, the result of the function $g_P$ is zero, the first threshold $t_{0p}$ being dependent on the probability q of the presence of the signal of interest, on the power of the thermal noise and on the power of the signal of interest,
    ▪ if the power of the signal is strictly above the first threshold $t_{0p}$, the result of the function $g_P$ is equal to the difference between the power of the signal and the first predetermined threshold $t_{0p}$, multiplied by a weighting coefficient $\beta_P$ dependent on the power of the signal of interest and on the power of the thermal noise,

- integrating (105) the result of the application (104) of the non-linear function $g_P$ over the set of time/frequency cells,
- calculating (106) a detection criterion T by integrating the result of the preceding integration step (105) over all of the antenna elements, and by adding to the result of this integration a corrective term dependent on the signal-to-noise ratio and on the probability q of the presence of the signal of interest in the received electromagnetic signal,
- comparing (107) the result of the integration with a second predetermined threshold, called the detection threshold $S_{det}$, in order to detect the presence of the signal of interest.

2. Method for detecting a signal of interest according to claim 1, in which the first threshold $t_{0p}$ is determined by searching for the intersection between the abscissa axis and the asymptote at infinity of the logarithm of the probability ratio defined as the quotient of the probability densities in the hypothesis ($H_1$), in which the signal of interest is present in a time/frequency cell, and in the hypothesis ($H_0$), in which the signal of interest is absent from a time/frequency cell.

3. Method for detecting a signal of interest according to claim 2, in which the probability q of the presence of the signal of interest and the sum of the power of the thermal noise and of the power of the signal of interest on each channel are estimated, using the following substeps (103):

- calculating the first and second order moments of the power of the signal measured for each reception channel,

- identifying the calculated first and second order moments with their theoretical values in order to form a system of equations,

- resolving the system of equations in order to determine, for each reception channel, an estimate $q_P$ of the probability and an estimate of the inverse of the sum,

- calculating the average of the estimates $q_P$ of the probability over all of the reception channels.

4. Method for detecting a signal of interest according to claim 3, in which the estimate of the inverse of the sum of the power of the thermal noise and of the power of the signal of interest is refined by resolving, for a second time, the system of equations in which the unknown probability q is replaced by the average of the estimates $q_P$ of the probability over all of the reception channels.

5. Method for detecting an electromagnetic signal according to any one of the preceding claims, in which the second detection threshold $S_{det}$ is configured to comply with a given probability of a false alarm.

6. Method for detecting an electromagnetic signal according to any one of the preceding claims, in which the antenna array has pattern diversity.

7. Device (200) for detecting an electromagnetic signal, called the signal of interest, capable of being contained in an electromagnetic signal, the device (200) comprising an antenna array comprising a plurality of antenna elements ($A_1,..A_P$) for the reception of the electromagnetic signal and means configured to implement the method according to any one of claims 1 to 6.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DOMINIQUE NOGUET et al.** Sensing techniques for cognitive radio-state of the art and trends-aw chite paper. IEEE draft, 17 Juillet 2009